# EUROPEAN PATENT APPLICATION

(11) **EP 3 428 488 A1**
(43) Date of publication of application: **16.01.2019**
(21) Application number: 17762955.7
(22) Date of filing: 24.02.2017
(51) Int. Cl.: F16J 15/10, F16J 15/12

(54) **GASKET AND SEALING DEVICE**

(30) Priority: 08.03.2016 JP 2016044002
(71) Applicant: NOK Corporation, Minato-ku Tokyo 105-8585 (JP)
(72) Inventor: AMANO Takuya, Makinohara-shi Shizuoka 421-0532 (JP)
(74) Representative: TBK
(86) International application number: PCT/JP2017/007044
(87) International publication number: WO 2017/154615

(57) **Abstract**

An object of the present invention is to provide a gasket that can reliably protect opposing end surfaces of two members from dust, water drops, salt water, and the like. The object can be achieved by the following structure. The gasket includes an annular gasket base 2 and an outer circumferential seal 3 that adheres along an outer circumferential edge portion of the gasket base 2. The outer circumferential seal 3 includes a sandwiched portion 3a that is sandwiched between opposing end surfaces of two members together with the gasket base 2, and a bulging rim portion 3b that bulges outwards from outer surfaces of the two members over the whole circumferences of the outer surfaces, when the gasket base 2 is sandwiched between the opposing end surfaces of the two members.

## Description

### TECHNICAL FIELD

The present invention relates to gaskets and sealing devices, and specifically relates to a gasket and a sealing device that can reliably protect opposing end surfaces of two members from dust, water drops, and the like.

### BACKGROUND

In an automobile or industrial equipment, for example, gaskets have a role of sealing off a portion between opposing end surfaces of two members forming a flow path of fluid such as gas, oil, or the like by being sandwiched between the end surfaces to seal the flow path.

As such gaskets, some gaskets have been known each of which includes a sealing unit that is composed of a seal material such as rubber and provided on a surface of a gasket base made of a metallic plate (refer to Patent Documents 1 and 2).

FIG. 8 is a cross-sectional view illustrating a state where the gasket described in Patent Document 2 is in use. A gasket 100 has beads 102 and 103 each being made of an elastic body on an inner circumferential side and an outer circumferential side on both front and rear surfaces of a gasket base 101. The gasket 100 is disposed between an end surface 201a of a member 201 and an end surface 202a of a member 202. The end surfaces 201a and 202a face each other. The gasket 100 is sandwiched between the end surfaces 201a and 202a as a result of the members 201 and 202 being fastened by a bolt 300. At that time, the beads 102 and 103 are compressed. As a result, the gasket 100 seals a flow path.

### PRIOR ART DOCUMENTS

### PATENT DOCUMENTS

Patent Document 1: JP-A-2005-146909
Patent Document 2: JP-UM-61-134548

### SUMMARY OF THE INVENTION

### PROBLEMS TO BE SOLVED BY THE INVENTION

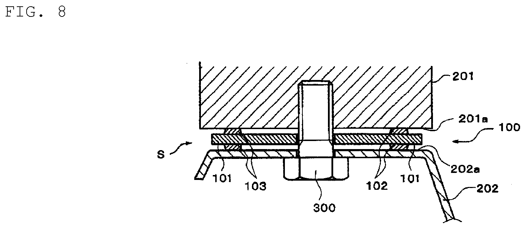

The conventional gasket 100 described above is not in close contact with the whole surfaces of the surfaces 201a and 202a when being sandwiched between the opposing end surfaces 201a and 202a of the members 201 and 202, thereby failing to cover the whole surfaces. In other words, a slight gap S is formed between the end surfaces 201a and 202a by the beads 102 and 103, as illustrated in FIG. 8, when the gasket 100 is sandwiched between the end surfaces 201a and 202a.

The gap S causes the end surfaces 201a and 202a to be exposed to an outside space on the outer circumferential side of the gasket 100. The gap S is seen as a concave portion when viewed from the outside of the two members 201 and 202 arranged in a face-to-face manner. When salt water flying in from the outside space remains in the gap S, salt water corrodes the two members (housings) 201 and 202. With a progress in corrosion, the surfaces with which the gasket is in contact are corroded. As a result, this corrosion may make it impossible to maintain sealing properties. When dust and water drops flying in from the outside space have corrosive properties, this may make it impossible to maintain sealing properties in the same manner as described above.

The conventional gasket, thus, has a room for improvement in preventing dust, water drops, and salt water flying in from the outside space from remaining in the gap S. The gap S is also formed in the gasket described in Patent Document 1 in the same manner as described above.

An object of the present invention is to provide a gasket that can reliably protect opposing end surfaces of two members from dust, water drops, salt water, and the like.

Another object of the invention is to provide a sealing device that can reliably protect opposing end surfaces of two members between which a gasket is sandwiched from dust, water drops, salt water, and the like.

Other objects of the invention are made clear by the following description.

### MEANS FOR SOLVING PROBLEMS

The objects can be achieved by the following respective inventions.

1. A gasket, comprising:
   an annular gasket base; and
   an outer circumferential seal that adheres along an outer circumferential edge portion of the gasket base and is made of a rubber elastic material, wherein
   the outer circumferential seal includes: a sandwiched portion that is sandwiched between opposing end surfaces of two members together with the gasket base; and a bulging rim portion that bulges outwards from outer surfaces of the two members over whole circumferences of the outer surfaces, when the gasket base is sandwiched between the opposing end surfaces of the two members.
2. The gasket according to 1, wherein a covering portion is continuously formed from the bulging rim portion, the covering portion being in contact with and along at least one of the outer surfaces of the two members when the gasket base is sandwiched between the end surfaces.
3. The gasket according to 2, wherein the covering portion is provided over the whole circumference of the bulging rim portion.
4. The gasket according to any one of 1 to 3, further comprising an inner circumferential seal that adheres along an inner circumferential edge portion of the gasket base and is made of a rubber elastic material, wherein
   a thickness of the outer circumferential seal is smaller than a thickness of the inner circumferential seal.
5. A sealing device, comprising:
   two members having respective end surfaces opposing each other; and
   a gasket sandwiched between the end surfaces, wherein
   the gasket includes: an annular gasket base; and an outer circumferential seal that adheres along an outer circumferential edge portion of the gasket base and is made of a rubber elastic material, and
   the outer circumferential seal includes: a sandwiched portion that is sandwiched between the end surfaces together with the gasket base; and a bulging rim portion that bulges outwards from outer surfaces of the two members over whole circumferences of the outer surfaces, and is pressed and flattened between the end surfaces.
6. The sealing device according to 5, wherein a covering portion is continuously formed from the bulging rim portion, the covering portion being in contact with and along at least one of the outer surfaces of the two members.
7. The sealing device according to 6, wherein the covering portion is provided over the whole circumference of the bulging rim portion, and is in contact with the outer surfaces of the two members over the whole circumference of the outer surfaces.
8. The sealing device according to any one of 5 to 7, wherein
   the gasket further includes an inner circumferential seal that adheres along an inner circumferential edge portion of the gasket base and is made of a rubber elastic material, and
   a thickness of the outer circumferential seal is smaller than a thickness of the inner circumferential seal.

### EFFECTS OF THE INVENTION

The present invention can provide a gasket that can reliably protect opposing end surfaces of two members from dust, water drops, salt water, and the like.

The present invention can provide a sealing device that can reliably protect opposing end surfaces of two members between which a gasket is sandwiched from dust, water drops, salt water, and the like.

### BRIEF DESCRIPTION OF DRAWINGS

FIG. 1 is a plan view illustrating an embodiment of a gasket according to the invention.
FIG. 2 is a cross-sectional view along line (ii)-(ii) in FIG. 1.
FIG. 3 is a cross-sectional view along line (iii)-(iii) in FIG. 1.
FIG. 4 is a partial cross-sectional view illustrating an embodiment of the gasket and a sealing device according to the invention.
FIG. 5 is a cross-sectional view illustrating another embodiment of the gasket and the sealing device according to the invention.
FIG. 6 is a cross-sectional view illustrating still another embodiment of the gasket and the sealing device according to the invention.
FIG. 7 is a perspective view illustrating other implementation aspects of the gasket according to the invention.
FIG. 8 is a cross-sectional view illustrating a state where a conventional gasket is in use.

### DESCRIPTION OF THE PREFERRED EMBODIMENTS

The following describes embodiments of the invention.

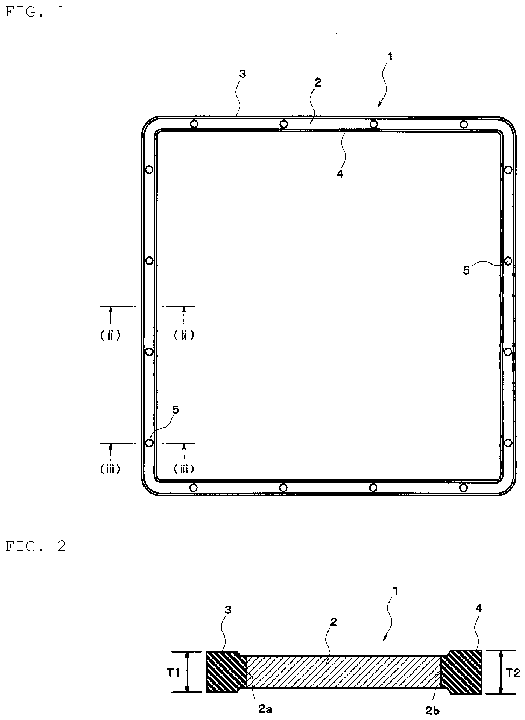

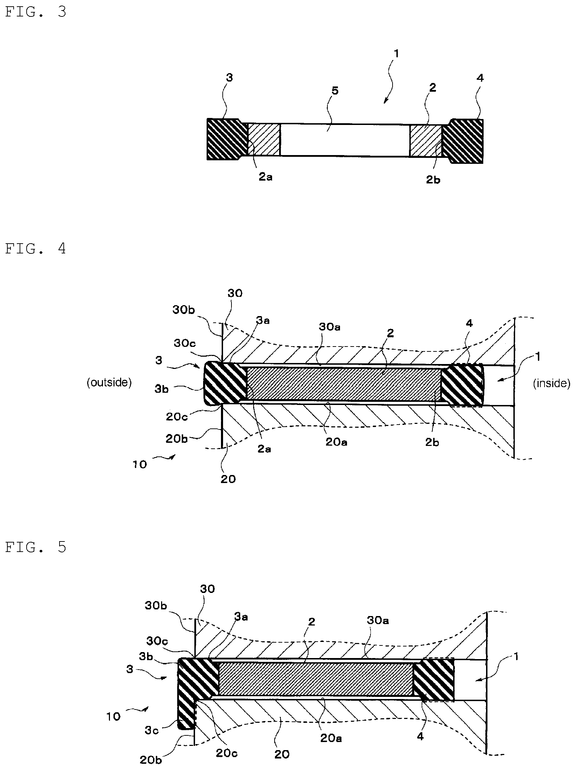

FIG. 1 is a plan view illustrating an embodiment of a gasket according to the invention. FIG. 2 is a cross-sectional view along line (ii)-(ii) in FIG. 1. FIG. 3 is a cross-sectional view along line (iii)-(iii) in FIG. 1.

As illustrated in FIG. 1, a gasket 1 includes a gasket base 2 made of an annular flat plate, an outer circumferential seal 3 made of a rubber elastic material adhering to an outer circumferential edge portion of the gasket base 2, and an inner circumferential seal 4 made of a rubber elastic material adhering to an inner circumferential edge portion of the gasket base 2. The gasket base 2 has a plurality of bolt holes 5 formed thereon with certain intervals.

The gasket base 2 is formed of a hard material such as a metal including a stainless steel or a synthetic resin including polyamide, for example. The gasket base 2 in the embodiment is formed in a rectangular annular shape. The outer diameter shape of the gasket base 2 may be another annular shape such as a ring-like shape. The gasket base 2 is formed in accordance with an end surface shape of a member on which the gasket 1 is mounted. The outer diameter shape of the gasket base 2 is not limited to any specific shape.

The outer circumferential seal 3 adheres to the outer circumferential edge portion of the gasket base 2, specifically as illustrated in FIGS. 2 and 3, an outer circumferential end surface 2a of the gasket base 2, as a result of baking (crosslinking (vulcanization) bonding) the rubber elastic material, thereby being formed integrally with the gasket base 2. As for the rubber elastic material used for the outer circumferential seal 3, one can be appropriately selected from ethylene propylene diene ternary copolymers (EPDM), fluororubber (FKM), hydrogenated nitrile rubber (HNBR), nitrile rubber (NBR), natural rubber (NR), and acrylic acid ester rubber (ACM).

The outer circumferential seal 3 is formed such that the outer circumferential seal 3 bulges outwards over the whole circumference of the outer circumferential end surface 2a of the gasket base 2 in a shape having a substantially rectangular cross section. The outer circumferential seal 3 has a thickness T1 formed larger than the thickness of the gasket base 2 such that a certain surface pressure can be generated when the outer circumferential seal 3 is compressed by being sandwiched between the end surfaces of two members, which are described later.

The inner circumferential seal 4 adheres to the inner circumferential edge portion of the gasket base 2, specifically, an inner circumferential end surface 2b of the gasket base 2, as a result of baking (crosslinking (vulcanization) bonding) the rubber elastic material in the same manner as the outer circumferential seal 3, thereby being formed integrally with the gasket base 2. The rubber elastic material used for the outer circumferential seal 3 can be used for the inner circumferential seal 4.

The inner circumferential seal 4 is formed such that the inner circumferential seal 4 bulges inwards over the whole circumference of the inner circumferential end surface 2b of the gasket base 2 in a shape having a substantially rectangular cross section. The inner circumferential seal 4 has a thickness T2 formed larger than the thickness of the gasket base 2 such that a certain surface pressure can be generated when the inner circumferential seal 4 is compressed by being sandwiched between the end surfaces of two members, which are described later.

FIG. 4, which is a partial cross-sectional view illustrating an embodiment of a sealing device according to the invention, illustrates a state where the sealing device uses the gasket 1 illustrated in FIGS. 1 to 3.

As illustrated in FIG. 4, a sealing device 10 includes two members 20 and 30 and the gasket 1 described above. The members 20 and 30 are arranged such that an end surface 20a of the member 20 and an end surface 30a of the member 30 face each other. The gasket 1 is sandwiched between the end surfaces 20a and 30a. The gasket 1 is sandwiched between the end surfaces 20a and 30a by being fastened between the end surfaces 20a and 30a with bolts, which are not illustrated, passing through the two members 20 and 30 through the bolt holes 5.

The outer shape of the gasket base 2 of the gasket 1 in a plan view is slightly smaller than the outer shape of each of the end surfaces 20a and 30a in a plan view while the outer shape of the outer circumferential seal 3 in a plan view is slight larger than the outer shape of each of the end surfaces 20a and 30a in a plan view. As a result, the outer circumferential seal 3 has a sandwiched portion 3a sandwiched between the end surfaces 20a and 30a together with the gasket base 2, and a bulging rim portion 3b that bulges outwards from an outer surface 20b of the member 20 over the whole circumference of the outer surface 20b and an outer surface 30b of the member 30 over the whole circumference of the outer surface 30b, when the gasket 1 is sandwiched between the end surfaces 20a and 30a.

As illustrated in FIG. 4, the sandwiched portion 3a of the outer circumferential seal 3 is pressed and elastically deformed by the end surfaces 20a and 30a while the bulging rim portion 3b of the outer circumferential seal 3 is pushed and bulges outwards from the portion between the end surfaces 20a and 30a, when the gasket base 2 is sandwiched between the end surfaces 20a and 30a. An outer circumferential corner 20c of the end surface 20a (the corner formed by the end surface 20a and the outer side surface 20b) bites into the bulging rim portion 3b over the whole circumference of the outer circumferential corner 20c and an outer circumferential corner 30c of the end surface 30a (the corner formed by the end surface 30a and the outer side surface 30b) bites into the bulging rim portion 3b over the whole circumference of the outer circumferential corner 30c.

As described above, in the gasket 1 and the sealing device 10, when the gasket 1 is sandwiched between the end surfaces 20a and 30s of the two members 20 and 30, the whole surfaces of the end surfaces 20a and 30a are covered at least on the outer circumferential side. The bulging rim portion 3b of the outer circumferential seal 3 of the gasket 1 bulges outwards from the outer surface 20b of the member 20 over the whole circumference of the outer surface 20b and the outer surface 30a of the member 30 over the whole circumference of the outer surface 30b. As a result, the outer circumferential seal 3 is in contact with the outermost circumference of each of the end surfaces 20a and 30a, preventing the end surfaces 20a and 30a from being exposed to the outside space. This prevents dust, water drops, salt water, and the like flying in from the outside space from entering and remaining between the end surfaces 20a and 30a, thereby making it possible to reliably protect the end surfaces 20a and 30a. This has an effect, particularly, of protecting the end surfaces 20a and 30a from salt water.

The bulging rim portion 3b bulges outwards from the outer surface 20b of the member 20 over the whole circumference of the outer surface 20b and the outer surface 30b of the member 30b over the whole circumference of the outer surface 30b. As a result, it is easy to check that the gasket 1 is mounted between the end surfaces 20a and 30a and the gasket 1 is easily positioned using the bulging rim portion 3b when the gasket 1 is mounted.

The inner circumferential seal 4 of the gasket 1 is pressed and flattened by being sandwiched between the end surface 20a of the member 20 and the end surface 30a of the member 30. The inner circumferential seal 4 of the gasket 1 demonstrates the sealing function on the inner circumferential side by being pressed and flattened to seal the flow path of fluid between the two members 20 and 30.

The thickness T2 of the inner circumferential seal 4 is preferably formed larger than the thickness T1 of the outer circumferential seal 3. When the gasket 1 is sandwiched between the end surfaces 20a and 30a, the inner circumferential seal 4 is more compressed than the outer circumferential seal 3. As a result, the inner circumferential seal 4 can demonstrate the function to seal fluid without being influenced by the outer circumferential seal 3.

As described above, the fluid sealing function in the gasket 1 is demonstrated by the inner circumferential seal 4. The outer circumferential seal 3 is, thus, not required to demonstrate the fluid sealing function in the gasket 1. As a result, it is not required for the outer circumferential corner 20c of the end surface 20a and the outer circumferential corner 30c of the end surface 30a, the outer circumferential corners 20c and 30c abutting the outer circumferential seal 3, to be finished so as to demonstrate the fluid sealing function.

FIG. 5 is a partial cross-sectional view illustrating another embodiment of the gasket and the sealing device according to the invention. The elements labeled with the same reference numerals in FIG. 4 illustrate the elements having the same structures as those in FIG. 4. The detailed explanations thereof described above are incorporated by reference herein and the detailed descriptions thereof are thus omitted.

In the embodiment, as illustrated in FIG. 5, a covering portion 3c that is in contact with and along the outer surface 20b, which is one of the outer surfaces of the two members 20 and 30 (in this case, the outer surface of the member 20), when the gasket base 2 is sandwiched between the end surfaces 20a and 30a is continuously provided from the bulging rim portion 3b of the outer circumferential seal 3 of the gasket 1. The covering portion 3c is formed of the same rubber elastic material as the outer circumferential seal 3, and is formed integrally with the bulging rim portion 3b such that the covering portion 3c hangs from the bulging rim portion 3b along the outer surface 20b of the member 20.

The covering portion 3c thus provided can increase a contact area of the outer circumferential seal 3 with the member 20, thereby making it possible to more easily position the gasket 1 when the gasket 1 is mounted. In addition, the covering portion 3c thus provided can prevent the gasket 1 from dropping off when the gasket 1 is mounted. As a result, workability in mounting of the gasket 1 can be improved.

The inner diameter of the covering portion 3c is preferably slightly smaller than the outer diameter of the outer surface 20b, which is in contact with the covering portion 3c, of the member 20. This structure allows the covering portion 3c to form a certain interference with respect to the outer surface 20b, thereby causing the covering portion 3c to be more closely in contact with the outer surface 20b. As a result, the sealing function on the outer circumferential side can be enhanced. In addition, the certain interference allows the covering portion 3c to be held to the member 20 by itself. As a result, workability in mounting of the gasket 1 can be more improved and the gasket 1 is more reliably prevented from dropping off.

The covering portion 3c thus structured may be provided by being in contact with the outer surface 30b of the member 30, which is the other member.

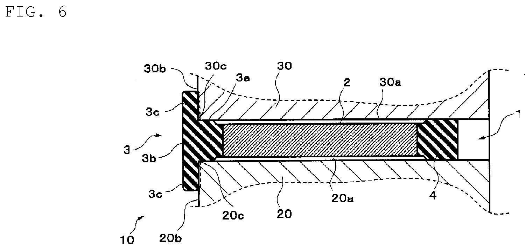

FIG. 6 is a cross-sectional view illustrating still another embodiment of the gasket and the sealing device according to the invention.

The covering portion 3c is not limited to being provided such that the covering portion 3c is in contact with only any one of the outer surface 20b of the member 20 and the outer surface 30b of the member 30. As illustrated in FIG. 6, the covering portion 3c may be provided such that the covering portion 3c is in contact with each of the outer surface 20b of the member 20 and the outer surface 30b of the member 30. As a result, the positioning effect, the sealing effect on the outer circumferential side, the mounting workability, and the drop prevention effect of the gasket 1 can be enhanced.

When the covering portion 3c is in contact with each of the outer surface 20b of the member 20 and the outer surface 30b of the member 30, a contact area between the covering portion 3c and the outer surface 20b and a contact area between the covering portion 3c and the outer surface 30b may be the same or different from each other. The contact areas different from each other make it possible for the member having a larger contact area to further demonstrate the positioning effect, the sealing effect on the outer circumferential side, the mounting workability, and the drop prevention effect of the gasket 1, which are described above. In addition, the contact areas different from each other make it possible to discriminate the front and back of the gasket 1, thereby further having an effect to enhance the mounting workability by recognizing the contact areas different from each other.

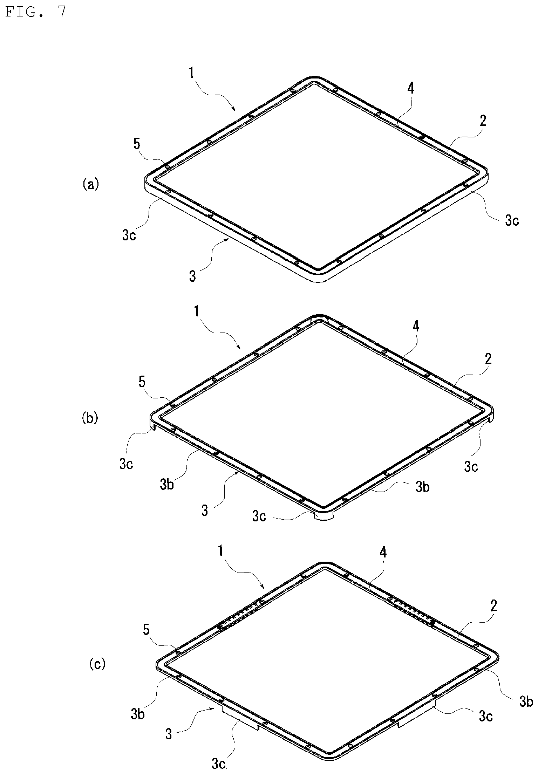

In the embodiment of the gasket and the sealing device according to the invention illustrated in FIG. 5 or 6, the covering portion 3c may be provided over the whole circumference of the bulging rim portion 3b or partially over the bulging rim portion 3b. For example, when the covering portion 3c is provided over the whole circumference of the bulging rim portion 3b in the embodiment illustrated in FIG. 5, an implementation aspect as illustrated in FIG. 7(a) can be achieved. The implementation aspect illustrated in FIG. 7(a) is an example where the gasket 1 includes the covering portion 3c that is in contact with the outer surface 20b of the member 20. This aspect is preferable in that the positioning effect, the sealing effect on the outer circumferential side, the mounting workability, and the drop prevention effect of the gasket 1, which are described above, can be more significantly demonstrated.

The covering portion 3c may also be partially provided on the bulging rim portion 3b in a range where the positioning effect, the sealing effect on the outer circumferential side, the mounting workability, and the drop prevention effect by the covering portion 3c can be obtained.

For example, when the gasket 1 has a polygonal shape, a single covering portion or two or more covering portions 3c can be provided on the corners of the polygon. When the gasket 1 has a shape having facing corners such as a quadrilateral shape, the covering portion 3c may be provided on a pair of facing corners or a plurality of pairs of facing corners out of the facing corners. When the gasket 1 has a shape having no facing corners such as a pentagonal shape, the covering portion 3c may be provided on a desired single corner or two or more corners or on all of the corners.

In the example illustrated in FIG. 7(b), in which the gasket 1 has a quadrilateral shape, the covering portion 3c is provided on each of two pairs of facing corners.

Furthermore, when the gasket 1 has a polygonal shape, the covering portion 3c can be provided on any side of the polygon. In this case, the side on which the covering portion 3c is provided is not limited to any particular side and a place at which the covering portion 3c is provided on the side is also not limited to any particular place.

For example, when the gasket 1 has a shape having facing sides such as a quadrilateral shape, the covering portion 3c may be provided on a pair of facing sides or a plurality of pairs of facing sides out of the facing sides. When the gasket 1 has a shape having no facing sides such as a pentagonal shape, the covering portion 3c may be provided on a desired single side or two or more sides or on all of the sides.

In addition, a part at which the covering portion 3c is provided on the side is not limited to any particular part. The covering portion 3c may be provided at the center of the side or a part other than the center of the side. Furthermore, the number of covering portions 3c provided on the side is not limited to any particular number.

In the example illustrated in FIG. 7(c), in which the gasket 1 has a quadrilateral shape, the covering portion 3c is provided at each of the centers of two pairs of facing sides.

For example, when the gasket 1 has a substantially circular shape, a part at which the covering portion 3c is provided is not limited to any particular part. A single covering portion or two or more covering portions 3c can be provided at facing positions in a radial direction of a short radius or at facing positions in a radial direction of a long radius of the substantially circular shape, or at a plurality of divided positions on the circumference of the substantially circular shape.

The covering portions 3c partially provided as described above make it possible to differentiate the outer appearance of the gasket 1 by the positions at each of which the covering portion 3c is provided and the number of covering portions 3c, for example. In this case, when the positions of the covering portions 3c and the number of covering portions 3c, for example, are in association with each standard pattern, the standard pattern of the gasket 1 can be discriminated from the outer appearance. This makes it possible to prevent miss use of the standard pattern when the gasket 1 is used depending on the usage. As a result, an effect to enhance the workability is also demonstrated.

In the examples illustrated in FIG. 7, the covering portion 3c is partially provided such that the covering portion 3c is in contact with only any one of the outer surface 20b of the member 20 and the outer surface 30b of the member 30. The arrangement is not limited to the examples. As illustrated in FIG. 6, the covering portion 3c may be partially provided such that the covering portion 3c is in contact with each of the outer surface 20b of the member 20 and the outer surface 30b of the member 30.

In this case, the way how the covering portion 3c in contact with the outer surface 20b of the member 20 is provided and the way how the covering portion 3c in contact with the outer surface 30b of the member 30 is provided may differ from each other. For example, the covering portion 3c in contact with the outer surface 20b can be provided over the whole circumference of the bulging rim portion 3b while the covering portion 3c in contact with the outer surface 30b can be partially provided on the bulging rim portion 3b. This structure makes it possible to discriminate the front and back of the gasket 1 when the gasket 1 is mounted, thereby enhancing the mounting workability by recognizing the arrangements different from each other. In addition, this structure makes it possible to discriminate the standard pattern and the mounting direction of the gasket 1 at a glance. As a result, wrong mounting can also be eliminated.

In the gasket 1 according to the invention, the inner circumferential seal 4 is not limited to being made of a rubber elastic material as described above. The inner circumferential seal 4 may be a bead formed on the gasket base 2.

The sealing device 10 according to the invention can be widely applied to usages in which the flow path of fluid between the two members 20 and 30 are sealed by the gasket 1 sandwiched between the end surface 20a of the member 20 and the end surface 30a of the member 30. For example, the sealing device 10 can be used for a case where a gasket creates a seal between an engine block and an oil pan in an engine of a car, a construction machine, or an outboard motor, for example.

### EXPLANATIONS OF LETTERS OR NUMERALS

- 1:: gasket
- 2:: gasket base
- 2a:: outer circumferential end surface
- 2b:: inner circumferential end surface
- 3:: outer circumferential seal
- 3a:: sandwiched portion
- 3b:: bulging rim portion
- 3c:: covering portion
- 4:: inner circumferential seal
- 10:: sealing device
- 20, 30:: member
- 20a, 30a:: end surface
- 20b, 30b:: outer surface
- 20c, 30c:: outer circumferential corner

## Claims

1. A gasket, comprising:
an annular gasket base; and
an outer circumferential seal that adheres along an outer circumferential edge portion of the gasket base and is made of a rubber elastic material, wherein
the outer circumferential seal includes: a sandwiched portion that is sandwiched between opposing end surfaces of two members together with the gasket base; and a bulging rim portion that bulges outwards from outer surfaces of the two members over whole circumferences of the outer surfaces, when the gasket base is sandwiched between the opposing end surfaces of the two members.

2. The gasket according to claim 1, wherein a covering portion is continuously formed from the bulging rim portion, the covering portion being in contact with and along at least one of the outer surfaces of the two members when the gasket base is sandwiched between the end surfaces.

3. The gasket according to claim 2, wherein the covering portion is provided over the whole circumference of the bulging rim portion.

4. The gasket according to any one of claims 1 to 3, further comprising an inner circumferential seal that adheres along an inner circumferential edge portion of the gasket base and is made of a rubber elastic material, wherein
a thickness of the outer circumferential seal is smaller than a thickness of the inner circumferential seal.

5. A sealing device, comprising:
two members having respective end surfaces opposing each other; and
a gasket sandwiched between the end surfaces, wherein
the gasket includes: an annular gasket base; and an outer circumferential seal that adheres along an outer circumferential edge portion of the gasket base and is made of a rubber elastic material, and
the outer circumferential seal includes: a sandwiched portion that is sandwiched between the end surfaces together with the gasket base; and a bulging rim portion that bulges outwards from outer surfaces of the two members over whole circumferences of the outer surfaces, and is pressed and flattened between the end surfaces.

6. The sealing device according to claim 5, wherein a covering portion is continuously formed from the bulging rim portion, the covering portion being in contact with and along at least one of the outer surfaces of the two members.

7. The sealing device according to claim 6, wherein the covering portion is provided over the whole circumference of the bulging rim portion, and is in contact with the outer surfaces of the two members over the whole circumference of the outer surfaces.

8. The sealing device according to any one of claims 5 to 7, wherein
the gasket further includes an inner circumferential seal that adheres along an inner circumferential edge portion of the gasket base and is made of a rubber elastic material, and
a thickness of the outer circumferential seal is smaller than a thickness of the inner circumferential seal.

## Amended claims

### Amended claims under Art. 19.1 PCT

1. (amended) A gasket, comprising:
an annular gasket base; and
an outer circumferential seal that adheres along an outer circumferential edge portion of the gasket base and is made of a rubber elastic material, wherein
the outer circumferential seal includes: a sandwiched portion that is sandwiched between opposing end surfaces of two members together with the gasket base; and a bulging rim portion that bulges outwards from outer surfaces of the two members over whole circumferences of the outer surfaces, and respective outer circumferential corners of the end surfaces bite into the bulging rim portion over the whole circumferences of the outer circumferential corners, when the gasket base is sandwiched between the opposing end surfaces of the two members.

2. The gasket according to claim 1, wherein a covering portion is continuously formed from the bulging rim portion, the covering portion being in contact with and along at least one of the outer surfaces of the two members when the gasket base is sandwiched between the end surfaces.

3. The gasket according to claim 2, wherein the covering portion is provided over the whole circumference of the bulging rim portion.

4. The gasket according to any one of claims 1 to 3, further comprising an inner circumferential seal that adheres along an inner circumferential edge portion of the gasket base and is made of a rubber elastic material, wherein
a thickness of the outer circumferential seal is smaller than a thickness of the inner circumferential seal.

5. (amended) A sealing device, comprising:
two members having respective end surfaces opposing each other; and
a gasket sandwiched between the end surfaces, wherein
the gasket includes: an annular gasket base; and an outer circumferential seal that adheres along an outer circumferential edge portion of the gasket base and is made of a rubber elastic material, and
the outer circumferential seal includes: a sandwiched portion that is sandwiched between the end surfaces together with the gasket base; and a bulging rim portion that bulges outwards from outer surfaces of the two members over whole circumferences of the outer surfaces, is pressed and flattened between the end surfaces, and respective outer circumferential corners of the end surfaces bite into the bulging rim portion over the whole circumferences of the outer circumferential corners.

6. The sealing device according to claim 5, wherein a covering portion is continuously formed from the bulging rim portion, the covering portion being in contact with and along at least one of the outer surfaces of the two members.

7. The sealing device according to claim 6, wherein the covering portion is provided over the whole circumference of the bulging rim portion, and is in contact with the outer surfaces of the two members over the whole circumference of the outer surfaces.

8. The sealing device according to any one of claims 5 to 7, wherein
the gasket further includes an inner circumferential seal that adheres along an inner circumferential edge portion of the gasket base and is made of a rubber elastic material, and
a thickness of the outer circumferential seal is smaller than a thickness of the inner circumferential seal.
